# FASCICULE DE BREVET EUROPEEN

(11) **EP 1 045 881 B1**
(45) Date de publication et mention de la délivrance du brevet: **22.10.2003**
(21) Numéro de dépôt: 99910196.7
(22) Date de dépôt: 05.02.1999
(51) Int. Cl.: C08K 13/02, C08L 77/00

(54) **COMPOSITION POLYAMIDE IGNIFUGEE**
FLAMMGEHEMMTE POLYAMID-ZUSAMMENSETZUNG
FLAME-PROOFED POLYAMIDE COMPOSITION

(30) Priorité: 11.02.1998 FR 9801860
(43) Date de publication de la demande: 25.10.2000
(73) Titulaire: Rhodia Engineering Plastics Srl, 20020 Ceriano Laghetto (MI) (IT)
(72) Inventeur: GALLI, Daniele, I-22066 Mariano Comense (IT); SPERONI, Franco, I-20020 Ceriano Laghetto (IT)
(74) Mandataire: Esson, Jean-Pierre
(86) Numéro de dépôt international: EP9900761
(87) Numéro de publication internationale: WO99041309

(56) Documents cités:
- EP-A- 0 101 207
- DE-A- 3 722 118
- GB-A- 2 097 008
- PATENT ABSTRACTS OF JAPAN vol. 008, no. 279 (C-257), 20 décembre 1984 & JP 59 149955 A (ASAHI KASEI KOGYO KK), 28 août 1984 & DATABASE WPI Week 8440 Derwent Publications Ltd., London, GB; AN 84-247460 "arc resistant polyamide composition"
- CHEMICAL ABSTRACTS, vol. 91, no. 2, 9 juillet 1979 Columbus, Ohio, US; abstract no. 5930, "Fire-resistant polyamide compositions" XP002080610 & JP 54 016565 A (NISSAN ET AL.)

## Description

La présente invention concerne une composition polyamide ignifugée notamment utilisable pour la fabrication d'articles moulés.

Elle concerne plus particulièrement une composition polyamide ignifugée par un système ignifugeant sans halogène ni phosphore.

Les compositions à base de résine polyamide sont utilisées pour la réalisation d'articles par différents procédés de mise en forme désignés par le terme générique "moulage". Ces articles sont utilisés dans de nombreux domaines techniques. Parmi ceux-ci la réalisation de pièces de systèmes électriques ou électroniques est une application importante requérant des propriétés particulières. Ainsi, ces pièces doivent présenter des propriétés mécaniques élevées mais également des propriétés de résistance chimique, d'isolation électrique et surtout une résistance au feu élevées.

L'ignifugation des compositions à base de résine polyamide a été étudiée depuis très longtemps. Ainsi, les ignifugeants principaux utilisés sont le phosphore rouge et, des composés halogénés tels que le dibromophénol, les polybromodiphényles, les polybromodiphénoxydes, les et le polystyrènes bromés. Depuis une vingtaine d'années, une nouvelle classe d'ignifugation a été trouvée, à savoir, des composés organiques azotés appartenant à la classe des triazines telles que la mélamine ou ses dérivés comme le cyanurate de mélamine et plus récemment les phosphates, polyphosphates et pyrophosphates de mélamine.

L'avantage de cette dernière classe d'ignifugeants réside dans le fait que les composés concernés ne contiennent pas d'halogènes ni de phosphore libre. En effet, les ignifugeants contenant des halogènes ou du phosphore rouge peuvent générer des gaz ou vapeurs toxiques lors de la combustion de la composition polyamide. Toutefois, les composés de mélamine utilisés seuls ne permettent pas d'obtenir une ignifugation satisfaisante des compositions à base de polyamide notamment quand elles contiennent des charges de renfort sous forme de fibres telles que fibres de verre, fibres minérales ou fibres organiques thermostables. En outre, les composés de mélamine fluidifiant le polyamide quand il brûle provoquent la formation de gouttes. Cette formation de gouttes est néfaste et peut provoquer l'inflammation des produits avec lesquels elles rentrent en contact comme le coton dans le test UL 94 décrit ci-après.

Pour résoudre ce problème, il a été proposé d'associer au composé de mélamine un autre composé tel qu'une charge minérale comme l'hydroxyde de magnésium comme décrit dans le brevet US 5 482 985. Toutefois, la quantité de composé de mélamine nécessaire pour obtenir les propriétés d'ignifugation désirées est toujours d'un niveau élevé. Cette concentration élevée en composé de mélamine présente certains inconvénients notamment pendant la fabrication de la composition, tels que production de vapeur des composés mélaminés ou pendant la production des articles moulés tels que obstructions des conduits de ventilation et des dépôts dans les moules.

La présente invention a notamment pour objectif de remédier à ces inconvénients en proposant un nouveau système d'ignifugation à base de composés de mélamine avec une teneur en composé de mélamine relativement faible.

A cet effet, l'invention propose une composition à base de polyamide comprenant un système d'ignifugation caractérisée en ce que ce système d'ignifugation est constitué par un dérivé de mélamine et une charge minérale constituée par du kaolin calciné.

Selon une autre caractéristique de l'invention, la concentration pondérale en dérivé de mélamine est comprise entre 1 et 30 % en poids par rapport au poids de résine polyamide, et avantageusement entre 7 et 10 % en poids.

Selon encore une autre caractéristique la concentration pondérale en kaolin calciné est comprise entre 5 et 40 % en poids par rapport au poids de résine polyamide. Avantageusement cette concentration est comprise entre 10 et 30 % en poids.

Ainsi, à titre d'exemple les kaolins calcinés convenables pour l'invention peuvent être obtenus à partir d'aluminosilicates hydratés, appelés kaolinite, traités par un procédé de déshydratation à chaud.

Ces charges utilisées dans les compositions chargées à base de polyamide donnent des propriétés de caractère fortement isotrope à ces compositions.

Les kaolins calcinés utilisés dans la présente invention sont de préférence traités en surface par des agents de couplage tels que des aminosilanes, pour améliorer leur compatibilité avec le polyamide.

La masse volumique des kaolins calcinés est typiquement égale à environ 2,6-2,65 g/cm³. La taille moyenne des particules de kaolin est inférieure à 2µm.

Selon une autre caractéristique de l'invention, le système ignifugeant comprend un composé comprenant au moins une fonction acide carboxylique et présentant une tension de vapeur faible aux températures de mélange avec la matrice polymérique notamment pendant le procédé de fabrication du mélange, par exemple à des températures comprises entre 200°C environ et 350°c environ. Comme exemples d'acides carboxyliques convenables, on peut citer les acides monocarboxyliques, tels que l'acide miristique, l'acide palmitique, l'acide stéarique, l'acide béhénique, l'acide benzoïque, l'acide salicylique et généralement les acides monocarboxyliques comprenant un nombre d'atomes de carbone supérieur à 10, les acides dicarboxyliques tels que l'acide oxalique, l'acide malonique, l'acide succinique, l'acide glutarique, l'acide adipique, l'acide pymélique, l'acide decanedioïque, l'acide dodécanedioïque, l'acide isophtalique, l'acide téréphtalique, ou polycarboxyliques tels que l'acide trimésique. Ce composé, par une action de diminution des longueurs de chaîne du polyamide quand celui-ci est fondu par la flamme, provoque des formations de gouttes de faible dimension donc présentant un rapport élevé surface/masse. Ainsi, la température de ces gouttes diminuera très rapidement et elles ne pourront plus enflammer les éléments avec lesquels elles rentrent en contact.

Avantageusement, l'acide mono-, di ou polycarboxylique est présent à une concentration pondérale comprise entre 0,01 % et 3 % par rapport à la résine polyamide, de préférence comprise entre 0,05 % et 1%.

Le polyamide est choisi dans le groupe comprenant les polyamides obtenus par polycondensation d'un diacide carboxylique linéaire avec une diamine linéaire ou cyclique comme le PA 6.6., PA.6.10, PA 6.12, PA 12.12, PA 4.6, MXD 6 ou entre un diacide carboxylique aromatique et une diamine linéaire ou aromatique comme les polytéréphtalamides, polyisophtalamides, polyaramides, les polyamides obtenus par polycondensation d'un aminoacide sur lui-même, l'amino-acide pouvant être généré par l'ouverture hydrolytique d'un cycle lactame tels que, par exemple PA 6, PA 7, PA 11, PA 12. Le procédé de l'invention est également convenable pour traiter les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

Les composés ou dérivés de mélamine convenables pour l'invention sont choisis dans le groupe comprenant le cyanurate de mélamine décrit dans les brevets japonais JP-A-53/51250, JP-A-54/118454 ou JP-A-54/16565, les phosphates et polyphosphates de mélamine décrits dans le brevets wo 9609344.

Selon une autre caractéristique de l'invention, la composition comprend des charges de renfort choisies dans le groupe comprenant des fibres de verre, fibres minérales telles que fibres de céramique, fibres organiques thermorésistantes comme les fibres en polyphtalamide.

La concentration pondérale des charges de renfort est comprise avantageusement entre 1 % et 50 % en poids par rapport au poids de résine polyamide.

Les compositions de l'invention peuvent comprendre tous les additifs habituellement utilisés dans les compositions à base de polyamide utilisées pour la fabrication d'articles moulés. Ainsi, on peut citer à titre d'exemple d'additifs les stabilisants thermiques, les stabilisants U.V., les antioxydants, les lubrifiants, les pigments, colorants, plastifiants ou des agents modifiant la résilience.

A titre d'exemple, les antioxydants et stabilisants chaleur sont, par exemple, des halogénures d'alcalins, des halogénures de cuivre, les composés phénoliques stériquement encombrés, les amines aromatiques.

Les stabilisants U.V. sont généralement des benzotriazoles, des benzophénones ou des HALS.

Les compositions de l'invention sont obtenus par mélange des différents constituants généralement dans une extrudeuse mono ou bivis, à une température suffisante pour maintenir la résine polyamide en milieu fondu. Généralement, le mélange obtenu est extrudé sous forme de joncs qui sont coupés en morceaux pour former des granulés.

L'addition des additifs ou du système ignifugeant peut être réalisée par ajout de ces composés dans le polyamide fondu sous forme pure ou sous forme de mélange concentré dans une résine telle que par exemple une résine polyamide.

Les granulés obtenus sont utilisés comme matière première pour alimenter les procédés de fabrication d'articles moulés tels que les procédés d'injection, d'extrusion, d'extrusion-soufflage.

Ainsi, la composition de l'invention convient particulièrement pour la fabrication d'articles utilisés dans le domaine de la connectique électrique ou électronique tels que éléments de disjoncteurs, interrupteurs, connecteurs ou analogues.

Les propriétés des compositions de l'invention sont déterminées sur des éprouvettes, selon les méthodes suivantes :
- Résistance à la flamme - test UL-94 selon la procédure des "Underwriters Laboratories" Ce test est réalisé avec des éprouvettes d'épaisseur de 1,6 mm et 0,8 mm. Le résultat est codifié comme suit :
   → N.C.: non classé (ignifugation faible)
   → V-2 : le temps moyen de combustion est inférieur à 25 secondes (auto-extinction), goutte de polyamide enflammant le coton
   → V-1 : temps moyen de combustion inférieur à 25 secondes (auto-extinction), pas d'inflammation du coton par la goutte
   → V-0 : temps moyen de combustion inférieur à 5 secondes (auto-extinction), pas d'inflammation du coton
- Résistance au fil incandescent mesurée selon la norme IEC 695-2-1 sur des éprouvettes d'épaisseur 3,0 mm ; 1,6 mm et 1 mm.

Les propriétés mécaniques sont déterminées selon les méthodes suivantes :
- résistance à la traction selon la norme ISO R 527 après conditionnement de l'éprouvette à 23°C et une humidité relative de 50 %
- allongement à la rupture selon la norme ISO 527
- module selon la norme ISO 527
- résistance aux chocs IZOD selon la norme ISO 179/leU
- résistance aux chocs CHARPY selon la norme ISO 179/leA
- résistance à la propagation de l'arc électrique selon la norme IEC 112
- HDT, température de déformation sous une charge de 1,81 MPa, selon la norme ISO 75
- indice de fluidité en milieu fondu (MFI) (g/10 min) déterminé selon la norme ASTM 1238
- indice de viscosité mesurée à partir d'une solution de polymère dans l'acide formique selon la norme ISO 307

L'invention est illustrée par les exemples ci-dessous donnés uniquement à titre indicatif et sans effet limitant sur la portée de l'invention.

Différentes compositions ont été fabriquées par mélange de polyamide avec un cyanurate de mélamine, une charge minérale du type kaolin et des fibres de verre.

Le mélange est réalisé dans une extrudeuse monovis à une température de 250°C. Le mélange est extrudé sous forme de joncs pour former des granulés par coupe de ces granulés.

Les matériaux utilisés sont :
Polyamide A₁ : polyhexaméthylène adipamide (PA 6.6) de viscosité relative (IV) égale à 126
Polyamide A₂ : copolyamide comprenant 90 % de motifs PA 6.6 et 10 % motifs polycaprolactame (PA 6) de viscosité relative (IV) égale à 142
Polyamide A₃ : polycaprolactame (PA 6) de viscosité relative (IV) égale à 148 composé de mélamine B : cyanurate de mélamine commercialisé sous le nom commercial "MELAPUR MC 25"
charge minérale C₁ : kaolin calciné commercialisé sous le nom commercial "TRANSLINK 445"
charge minérale C₂: Wollastonite
fibres de verre D : fibres de verre de diamètre 10 µm, sous forme de "chopped strands"

La concentration de chaque composant est indiquée dans le tableau ci-dessous :

Toutes ces compositions comprennent 0,5 % en poids d'additifs lubrifiant et antioxydant et 0,5 % d'acide isophtalique.

| Ex. | Composants | Mélamine cyanurate | Charge minérale | Fibres de verre |
|---|---|---|---|---|
| 1 | A₁ : 56 % A₃ : 10 % | 8 % | C₁ : 25 % | 0 % |
| 2 | A₁ : 56 % A₃ : 10 % | 8 % | C₁ : 20 % | 5 % |
| 3 | A₂ : 66 % | 8 % | C₁ : 25 % | 0 % |
| 4 | A₂ : 66 % | 8 % | C₁ : 20 % | 5 % |
| 5 | A₁ : 66 % | 8 % | C₁ : 25 % | 0 % |
| 6 | A₁ : 66 % | 8 % | C₁ : 20 % | 5 % |
| E₁ | A₃ : 49,0 % | 10 % | C₂ : 40 % | 0 % |
| E₂ | A₃ : 91 % | 8 % | 0 % | 0 % |
| E₃ | A₃ : 79 % | 0 % | C₁ : 20 % | 0 % |

Les propriétés d'ignifugation et mécaniques de ces compositions sont rassemblées dans le tableau ci-après :

| Propriétés | 1 | 2 | 3 | 4 | 5 | 6 | E₁ | E₂ | E₃ |
|---|---|---|---|---|---|---|---|---|---|
| Indice de fluidité g/10 min | 24 | 25 | 22 | 8,5 | 11,5 | 25 | -- | -- | |
| résistance aux chocs Charpy entaillés KJ/m² | 2,1 | 2,1 | 2,2 | 2,1 | 4 | 3,7 | 2,4 | 3,6 | 6,3 |
| résistance aux chocs Charpy non entaillés KJ/m² | 13,8 | 22,8 | 27,2 | 26,9 | 85 | 36,7 | 39 | 210 | 350 |
| résistance à la traction MPa | 75,2 | 86,6 | 77,8 | 86,7 | 79,8 | 87,6 | 85 | 60 | 70 |
| allongement à la rupture % | 16 | 1,7 | 1,7 | 1,7 | 5,2 | 2,7 | 2,2 | 15 | 25 |
| module MPa | 6178 | 6796 | 5919 | 6981 | 5567 | 6242 | 4700 | 3100 | 3700 |
| Test UL-94 1,6 mm/0,8 mm | V0/V0 | V2/V0 | V2/V0 | V0/V2 | V0/V0 | V2/V0 | V2/V2 | V0/V2 | V2/V2 |
| test au filament incandescente à 3/1,6/1 mm | 960/960 /960 | 960/960 /960 | 960/960 /960 | 960/960 /960 | 960/960 /960 | 960/960 /960 | 850/960 /960 | 960/960 /960 | 750/650 /850 |
| résistance à la propagation de l'arc à 450 V | bon | bon | bon | bon | bon | bon | - | | |
| HDT (1,81 MPa) °C | 111 | 186 | 99 | 162 | 81 | 133 | - | | |

Ces essais montrent l'effet synergique de l'association cyanurate de mélamine et kaolin car le cyanurate de mélamine conduit à une composition présentant de faibles propriétés mécaniques, tandis qu'une composition avec du kaolin mais sans cyanurate de mélamine a des propriétés d'ignifugation et de résistance au fil incandescent médiocres.

## Revendications

1. Composition à base de polyamide comprenant un système d'ignifugation **caractérisée en ce que** ledit système d'ignifugation est constitué par un dérivé de mélamine et du kaolin calciné.

2. Composition selon la revendication 1, **caractérisée en ce que** la concentration pondérale en cyanurate de mélamine est compris entre 1 et 30 % en poids par rapport au poids de polyamide.

3. Composition selon la revendication 1 ou 2, **caractérisée en ce que** la concentration pondérale en kaolin est comprise entre 5 et 40 % en poids par rapport au poids de polyamide.

4. Composition selon l'une des revendications 1 à 3, **caractérisée en ce que** le dérivé de mélamine est choisi dans le groupe comprenant le cyanurate de mélamine, le phosphate de mélamine, les polyphosphates ou pyrophosphates de mélamine.

5. Composition selon l'une des revendications précédentes, **caractérisée en ce qu'**elle comprend une charge de renfort choisie dans le groupe comportant les fibres de verre, fibres minérales, fibres organiques résistantes à la chaleur.

6. Composition selon l'une des revendications précédentes, **caractérisée en ce que** le système ignifugeant comprend un acide mono, di ou polycarboxylique.

7. Composition selon la revendication 6, **caractérisée en ce que** l'acide mono, di ou polycarboxylique est présent à une concentration pondérale comprise entre 0,01 % et 3 % par rapport à la résine polyamide.

8. Composition selon la revendication 6 ou 7, **caractérisée en ce que** l'acide précité est choisi dans le groupe comprenant l'acide miristique, l'acide palmitique, l'acide stéarique, l'acide béhénique, l'acide benzoïque, l'adde salicylique, l'acide oxalique, l'acide malonique, l'acide succinique, l'acide glutarique, l'acide adipique, l'acide pymélique, l'acide decanedioïque, l'acide dodécanedioïque, l'acide isophtalique, l'acide téréphtalique, l'acide trimésique.

9. Article obtenu par moulage, mise en forme d'une composition selon l'une des revendications 1 à 8.

## Patentansprüche

1. Zusammensetzung auf der Basis von Polyamid, umfassend ein System zur Flammhemmung, **dadurch gekennzeichnet, daß** das genannte System zur Flammhemmung aus einem Derivat von Melamin und von kalziniertem Kaolin besteht.

2. Zusammensetzung nach Anspruch 1, **dadurch gekennzeichnet, daß** die gewichtsmäßige Konzentration an Melamincyanurat zwischen 1 Gew.-% und 30 Gew.-% beträgt, bezogen auf das Gewicht des Polyamids.

3. Zusammensetzung nach Anspruch 1 oder 2, **dadurch gekennzeichnet, daß** die gewichtsmäßige Konzentration an Kaolin zwischen 5 Gew.-% und 40 Gew.-% beträgt, bezogen auf das Gewicht des Polyamids.

4. Zusammensetzung nach irgendeinem der Ansprüche 1 bis 3, **dadurch gekennzeichnet, daß** das Melaminderivat aus der Gruppe gewählt wird, die Melamincyanurat, Melaminphosphat, die Polyphosphate oder Pyrophosphate von Melamin umfaßt.

5. Zusammensetzung nach irgendeinem der vorstehenden Ansprüche, **dadurch gekennzeichnet, daß** sie einen verstärkenden Füllstoff enthält, gewählt aus der Gruppe, die Glasfasern, mineralische Fasern oder gegen Hitze resistente organische Fasern umfaßt.

6. Zusammensetzung nach irgendeinem der vorstehenden Ansprüche, **dadurch gekennzeichnet, daß** das System zur Flammhemmung eine Mone-, Di- oder Polycarbonsäure umfaßt.

7. Zusammensetzung nach Anspruch 6, **dadurch gekennzeichnet, daß** die Mono-, Di- oder Polycarbonsäure in einer gewichtsmäßigen Konzentration zwischen 0,01 % und 3 % anwesend ist, bezogen auf das Polyamidharz.

8. Zusammensetzung nach Anspruch 6 oder 7, **dadurch gekennzeichnet, daß** die vorstehend genannte Säure aus der Gruppe gewählt wird, die Myristinsäure, Palmitinsäure, Stearinsäure, Behensäure, Benzoesäure, Salicylsäure, Oxalsäure, Malonsäure, Bernsteinsäure, Glutarsäure, Adipinsäure, Pimelinsäure, Decandisäurs, Dodecandisäure, Isophthalsäure, Terephthalsäure und Trimesinsäure umfaßt.

9. Artikel, erhalten durch Formgießen oder Formgebung einer Zusammensetzung nach einem der Ansprüche 1 bis 5.

## Claims

1. Polyamide-based composition comprising a fire-retardation system, **characterized in that** the said fire-retardation system consists of melamine derivative and calcined kaolin.

2. Composition according to Claim 1, **characterized in that** the weight concentration of melamine cyanurate is between 1 and 30% by weight with respect to the weight of polyamide.

3. Composition according to Claim 1 or 2, **characterized in that** the weight concentration of kaolin is between 5 and 40% by weight with respect to the weight of polyamide.

4. Composition according to one of Claims 1 to 3, **characterized in that** the melamine derivative is chosen from the group comprising melamine cyanurate, melamine phosphate and melamine polyphosphates or pyrophosphates.

5. Composition according to one of the preceding claims, **characterized in that** it includes a reinforcing filler chosen from the group comprising glass fibres, mineral fibres and heat-resistant organic fibres.

6. Composition according to one of the preceding claims, **characterized in that** the fire-retardant system contains a mono-, di- or polycarboxylic acid.

7. Composition according to Claim 6, **characterized in that** the mono-, di- or polycarboxylic acid is present in a weight concentration of between 0.01% and 3% with respect to the polyamide resin.

8. Composition according to Claim 6 or 7, **characterized in that** the aforementioned acid is chosen from the group comprising myristic acid, palmitic acid, stearic acid, behenic acid, benzoic acid, salicylic acid, oxalic acid, malonic acid, succinic acid, glutaric acid, adipic acid, pimelic acid, decanedioic acid, dodecanedioic acid, isophthalic acid, terephthalic acid and trimesic acid.

9. Article obtained by moulding or forming a composition according to one of Claims 1 to 8.
